# EUROPEAN PATENT APPLICATION

(11) **EP 3 047 717 A1**
(43) Date of publication of application: **27.07.2016**
(21) Application number: 16151541.6
(22) Date of filing: 15.01.2016
(51) Int. Cl.: A01B 73/04

(54) **SOIL WORKING IMPLEMENT**

(30) Priority: 19.01.2015 DK 201570026
(71) Applicant: Samson Agro A/S, 8800 Viborg (DK)
(72) Inventor: Gregersen, Morten, 7830 Vinderup (DK)
(74) Representative: Nielsen, Leif

(57) **Abstract**

There is disclosed a soil working implement (1) including an implement frame having a plurality of parallel support members (9) that extend transversely of a working direction, each provided with juxtaposed soil working tools (7). The implement frame is divided into two implement sections (11) that are pivotably interconnected in order to be pivoted between a horizontal working position and a vertical transport position.

At each side of two implement sections (11) there is provided a side wing (12) that supports soil working tools (7), and which can be pivoted or displaced between an inner transport position and an outer working position in order to increase the working width of the implement.

Hereby is achieved a large working width and at the same time reduced tool height and a high ground clearance when transporting the implement.

## Description

### Field of the Invention

The present invention concerns a soil working implement including an implement frame having a plurality of parallel support members that extend transversely of a working direction, each provided with juxtaposed soil working tools, the implement frame being divided into at least two implement sections that are pivotably interconnected in order to be pivoted between a horizontal working position and a vertical transport position.

### Background of the Invention

Soil working implements can be provided with various kinds of soil working tools, e.g. spring tines and discs.

In the following, the invention will primarily be described in detail with reference to to spring tine harrows as the invention is developed in connection with such implements.

Agricultural soil is prepared for plant production by ploughing, harrowing and fertilising the soil, among others, before the coming crop is laid in the soil by sowing.

In order to ensure an efficient plant production it is common practice that certain work procedures are executed in combination. It is common that preparation of seed-bed and sowing are performed simultaneously as well as fertilisation and seed-bed preparation, or fertilisation and working of top soil, are combined as well.

In particular fertilisation with domestic animal manure has evolved into burying liquid manure by means of spring tine harrows. The liquid manure is hereby placed in the soil whereby evaporation, watering down and smell nuisances are reduced.

Today, slurry tankers will typically be used with a liquid manure incorporator due to the official requirements. A liquid manure incorporator is a combination of a harrow and a hose incorporator. At first, the harrow cuts the soil, and the hose incorporator places the liquid manure while a succeeding drum covers up the laid liquid manure run.

The combination of liquid manure incorporator and harrow is a relatively new technique that has become a legal requirement in some countries in order to reduce the environmental load by application of liquid manure.

It is prior art to work black soil by soil working implements with spring tines. Each tine cuts into the soil, and lifts and turns the overlying soil up over left plant remains.

The individual spring tines are often mounted with a certain spacing between the spring tines in a row. By arranging several rows of spring tines, frequently two or three rows, in succession in sections where the tines in each row are offset relative to each other, the total working of the soil is enhanced while at the same time each tine is provided the best possibility of covering plant remains.

By disposing spring tines in several rows provided in parallel after each other as seen in the direction of operation of the implement, the spacing between the spring tines is reduced and a denser working of the soil is achieved.

Soil working implements with other soil working tools than spring tines are known. It is therefore known with other soil working tools in the form of disc harrows where several rows of discs are used for working the soil.

It is also prior art to use soil working implements with two sections or three sections. Typically, three sections are used where two side sections can be folded up from a horizontal working position to a vertical transport position over a central section.

Spring tine harrows are today made either as lift suspended implements for a tractor or as towed implements trailing after a tractor. The working width of lift suspended harrows is often limited, partly due to the self-weight of the harrows and partly due to the traffic regulations.

Most lift suspended solutions are based on three sections, and a smaller central sections is applied at the middle of the implement, to which in continuation thereof are hinged a right and a left side section that can be folded up over the central section during transport.

Harrows with greater working widths are therefore typically made as towed implements where a special transport unit enables that the sections are not disposed in continuation of each other, but behind a front section during transport.

In combination implementes where the harrow is used in combination with a liquid manure spreader, the harrow will most often be suspended on the slurry tanker. In that case, the slurry tankers are provided with a triple point suspension known from tractors.

The usual traffic rules often determine maximum widths, heights and lengths of implements to be transported on public roads.

It is common that the maximum allowable transport width is 3 m, and the allowable transport height is 4 m. In Denmark, according to prescribed requirements for vehicles, the total length of a road train (tractor + trailer) must not exceed 18.5 m, and the total trailer length only must not exceed 12 m, the width must not exceed 3 m and the height must not exceed 4 m.

The traffic regulations mean that the maximum working width of a soil working implement, e.g. a spring tine harrow with one section, is often just under 3 m.

The ground clearance of the spring tine harrow will limit the number of sections that can be established in a row and folded in over a central section during transport.

By folding two sections up during transport and down into working position again, by two sections it is possible to provide up to 2 x 3.5 = 7 m working width. The reason that a width of 2 x 4 = 8 m cannot be provided is caused by the fact that the transport to and from the field requires up to 0.5 m ground clearance between the ground and the lower implement part in order that the implement does not interfere with the ground.

The desire for increasing the working width of lift suspended soil working implements has not been of interest for common harrows as the towed technique provides better options.

The use of triple point suspended harrows together with a slurry tanker has increased the interest for greater working widths of lift suspended implements.

It is also known by harrow implements used in combination with slurry tankers that the two side harrow sections folded up during transport are provided an unfolding side wing with individual spring tines mounted thereon. These side wings may reduce the height during transport by folding inwards.

This movable side wing is added at the outer side of existing sections and is unfolded during operation in order thereby to provide the option of increasing the working width by yet an addition corresponding to the width of the unfolded side wing.

For several years there has been a desire for increasing the working width of implements for burying liquid manure, including also the width of harrows used in combination with a slurry tanker. At the same time, there is a desire for ensuring the ground clearance during transport.

### Object of the Invention

The object of the present invention is to indicate an implement of the kind mentioned in the introduction, where this desire is achieved and where there is also a possibility of providing an implement which is technically simple in design.

### Description of the Invention

According to the present invention, this is achieved by an implement of the kind mentioned in the introduction which is peculiar in that at each side of the two implement sections there is provided a side wing that supports soil working tools, and which can be pivoted or displaced between an inner transport position and an outer working position in order to increase the working width of the implement.

The new feature is to provide two pivotable or displaceable side wings for each implement section. These additional movable side wings will ensure the ground clearance during transport and provide great working width. The movable side wings facing each other will thus be elevated above the ground when moved towards the inner transport position, after the two implement sections have been pivoted into their vertical transport position.

The two implement sections are pivotably suspended in a frame such that they by pivoting to the working position are disposed spaced apart. Only after moving the mutually facing the side wings the two implement sections will be closely juxtaposed such that across the entire width of the implement tools are provided with a desired uniform spacing.

The basis of the invention has been that prior art tool technique based on application of only two implement sections instead of three has been used. Hereby is achived a design which is more simple and where it also appears that it is actually possible to attain great working width and at the same time ground clearance. By using side wings at both sides of each implement section it is possible to add large working width and ground clearance by providing an extra folding or displacing mechanism in each implement section.

According to the invention, various mechanisms can be used for establishing a movement of the two side wings.

Surprisingly, it has appeared possible to limit the number of implement sections to two instead of three sections and at the same time to increase the working width. All things considered, reduction to two sections will reduce the complexity of the implement.

Hydraulic or electric actuators can therefore be used. The mechanisms that establish the movement of the side wings will typically be connected to a central support frame which at the same time is used for supporting the implement sections of the implement. The implement sections will then be mounted for pivoting about a central support frame.

If the tine spacing is about 0.75 m, a total working width of the magnitude 2 x (3.5+0.75+0.75) = 10 m will appear.

It is also part of the invention that ground clearance for the frame parts in each implement section is provided with a mechanical blockage when placed in the working position. This blockage is to ensure a more robust total frame construction in the working position.

By a combination implement in the form of a slurry tanker and a harrow for burying it is, however, possible also to use the towed technology. The soil working implement may then be suspended on a towed frame which is connected with a tow hook at the rear of the slurry tanker.

Moreover, the soil working implement can be mounted in a triple point suspension, but with a frame on which is mounted supporting wheels. It may therefore be said that the soil working implement operates as a "semi-towed" implement.

The soil working implement may then, as alternative to being lift suspended on a slurry tanker, also be towed, semi-towed or lift suspended directly on a tractor.

According to a further embodiment, the invention is peculiar in that the soil working tools are spring tines. The spring tines will usually be used for soil working in connection with burying liquid manure. The spring tines will therefore be placed on a harrow construction mounted at the rear side of a slurry tanker. When spreading liquid manure it is particularly important to have a construction which is as compact possible on a lift suspended soil working implement.

According to a further embodiment, the invention is peculiar in that the soil working tools are discs. Discs can be used either alone or together with other soil working implements, as e.g. compacting rollers.

According to a further embodiment, the invention is peculiar in that the implement is a lift suspended implement. As mentioned above, the advantages of the compact design is particularly advantageous by lift suspended implements as the movement of the side wings for the transport position provides reduced upper height as well as high ground clearance when rearranging the implement to transport position.

According to a further embodiment, the invention is peculiar in that the support members are made of telescoping tubes that enable displacement of the side wings. By using telescoping tubes a rigid structure is achieved. At the same time, the telescoping tube can be formed by support members having largely the same design as traditional harrows.

According to a further embodiment, the invention is peculiar in that the displacement of the side wings between the inner transport position and the outer working position corresponds to the distance between juxtaposed soil working tools in the associated implement section. The optimal retraction of the side wings is hereby achieved. It is possible to have side wings that are telescoping at several levels such that in each side wing there is not only one telescoping retractability, but two or more that enable a greater working width.

According to a further embodiment, the invention is peculiar in that the side wings are hinged about a vertical shaft at a front end of an associated implement section such that the rearmost soil working tool from the transport position to the working position is moved a distance corresponding to the distance between juxtaposed soil working tools in the associated implement section. As alternative to displacement, the movement of the side wings can occur by pivoting about a vertical shaft. The vertical shaft will preferably be disposed at the front end of the implement section, but may alternatively be disposed at the rear end. The important issue is here that the pivoting of the side wings is effected by such an angle that the spacing between the working tools is increased by a length corresponding to the spacing between juxtaposed soil working tools. Thus is achieved additional working width at each side corresponding to the spacing between two working tools.

According to a further embodiment, the invention is peculiar in that the two implement sections are mounted on a support frame supporting an actuator which is connected with the side wings for providing the movement between the inner transport position and the outer working position. By using a support frame is achieved an advantage as the support frame can be provided with mounting points for the lift suspension of the implement. The support frame can thus be provided with hydraulics from the tractor in a simple way, and a hydraulic piston can be used as actuator.

Alternatively, an electric actuator can be used. A mechanical actuator can also be used for establishing the movement of the side wings.

According to a further embodiment, the invention is peculiar in that the two implement sections are suspended pivotably in the support frame such that they are spaced apart by pivoting to the working position, and that the two implement sections only after movement of the side wings facing each other will be closely juxtaposed such that tools are disposed with uniform spacing across the entire width of the implement.

By only two implement sections is achieved a simple design compared with the more traditional three-part implements. The two implement sections will be disposed with points of pivoting that are spaced apart in the support frame. The spacing between the pivoting points located under the support frame will be "filled" with tools when the side wings that face each other are extended to the working position. If the inner side wings facing each other were not displaceable, a pivoting into the transport position would cause that these side wings after pivoting the implement section into a vertical transport position will far too close to the ground. By the displacement of mutually facing side wings there is thus achieved a uniform working of the soil across the entire width of the implement.

According to a further embodiment, the invention is peculiar in that it is mounted on a slurry tanker. As mentioned above, the need for a soil working implement according to the invention will be particularly usable as a lift mounted implement that is suspended at the rear side of the tank of a slurry tanker.

### Description of the Drawing

- Fig. 1: shows an implement according to the invention in the form of a harrow mounted on a slurry tanker;
- Fig. 2: shows a schematic drawing of three implement sections for an implement according to the invention with movable side wings;
- Fig. 3: shows an implement section for a soil working implement according to the invention with the side wings in a working position;
- Fig. 4: shows a view corresponding to Fig. 3 with the side wings in transport position;
- Fig. 5: shows an implement according to the invention with two implement sections pivoted into vertical transport position but before retraction of the side wings;
- Fig. 6: shows a view corresponding to Fig. 5 but with the side wings in retracted transport position;
- Fig. 7: shows a partial perspective view of an implement section with extended side wing;
- Fig. 8: shows a partial perspective view of a further embodiment of an implement section with extended side wing; and
- Fig. 9: shows a central support frame that support an implement according to the invention and other soil working implements.

### Detailed Description of Embodiments of the Invention

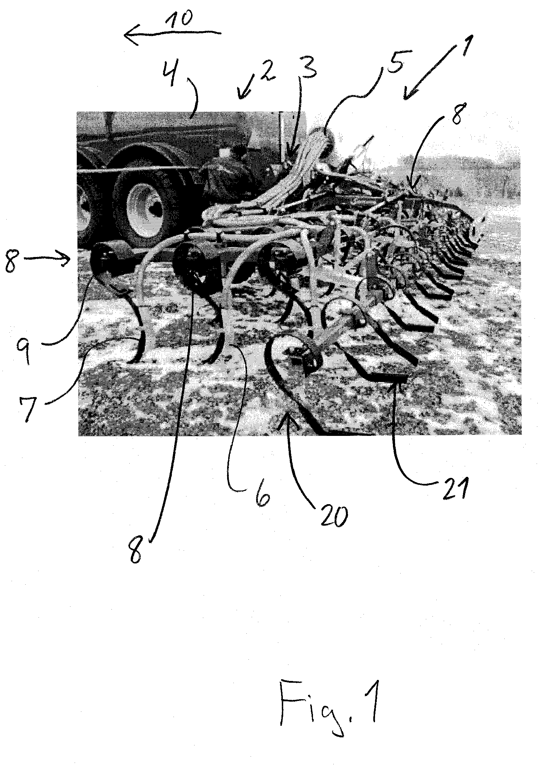

Fig. 1 shows a soil working implement 1 according to the invention. The soil working implement is mounted in a triple point suspension 3 behind a slurry tanker 4. A hose arrangement 5 contains a series of individual hoses 6. The individual hoses 6 are disposed at the rear side of soil working tools in the form of harrow tines 7 on the implement 1 such that the liquid manure can be placed in the furrow formed by the harrow tine 7.

Harrow tines 7 are provided in three rows 8, as the harrow tines 7 are mounted on support members 9 extending transversely of a working direction 10 for the soil working implement 1. The implement 1 has an implement frame divided into two implement sections, which will be explained in more detail in the following. In the shown situation, the implement sections are disposed in a horizontal working position extending in continuation of each other transversely of the working direction 10.

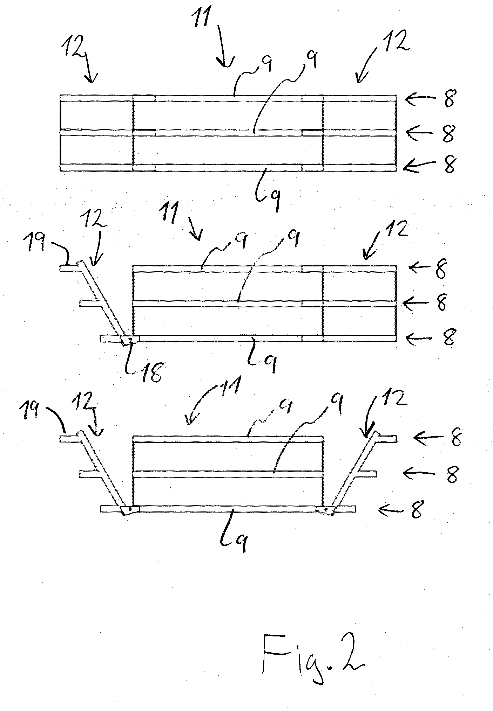

Fig. 2 shows schematic drawings of the construction of implement sections 11 that constitute part of the soil working implement. In Fig. 2, the implement sections appear without the soil working tools. It appears that each implement section 11 includes three parallel support members 9 for the soil working tools. At each side of a section there is provided a side wing 12. It is seen in the upper Figure that the two side wings 12 are displaceable. It is seen in the lower Figure that the two side wings 12 are pivotable. In the middle Figure is seen a combination with an extendable and a pivotable side wing 12.

In the shown schematic drawings, all side wings 12 are shown in an outer working position where the side wings are moved into an outer position. When the implement is to be transported, the side wings will be displaced and pivoted, respectively, towards an inner transport position in order thereby to reduce the extension of the implement during transport.

The side wings, which are displaceable, are provided by telescoping support members as will be explained below.

The pivotable side wings 12 are mounted on a vertical shaft 18 at a front end of an associated fixed implement section 11. Therefore, the rearmost soil working implement, which is disposed on a frame part 19, can be moved with a spacing corresponding to the spacing between juxtaposed soil working tools in an associated fixed implement section.

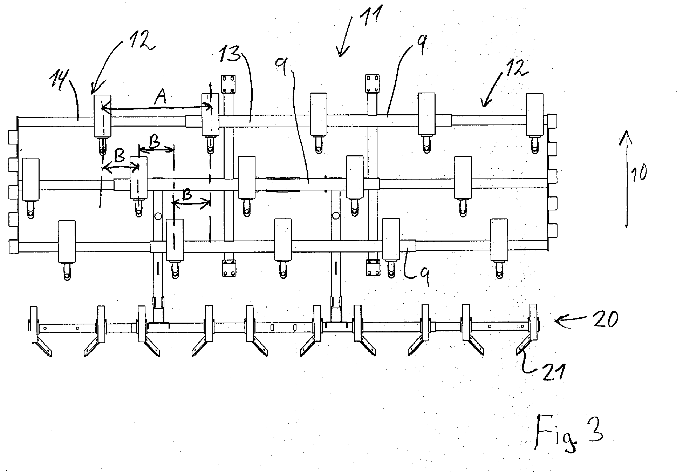

Fig. 3 shows a working implement in the form of a harrow with a number of harrow tines 7. The harrow has the working direction 10 indicated by arrow to the right on the Figure.

The two side wings 12 are extended in this Figure. Hereby, equal spacing A will appear between the harrow tines on each support member 9. In this situation, the spacing B between harrow tines provided on subsequent support members 9 will be identical as well.

The harrow is in its working position in this configuration.

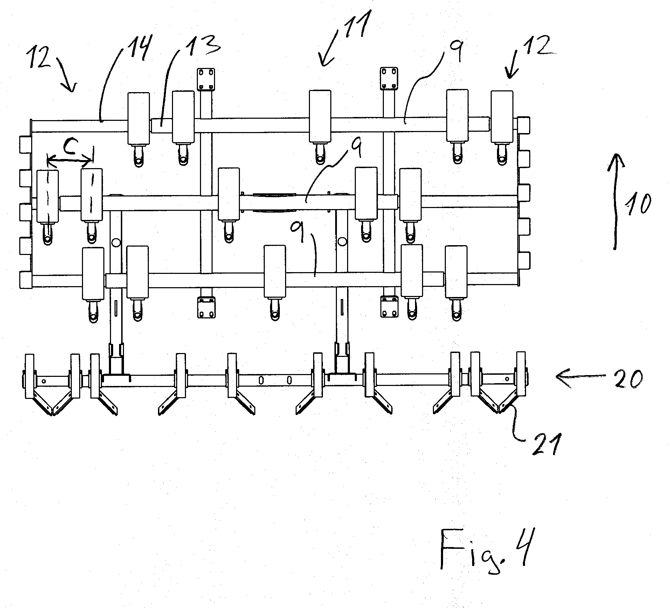

Fig. 4 shows the implement section 11 appearing in Fig. 3. In this Figure, the two side wings 12 are displaced to an inner transport position. Hereby is seen that the spacing between the harrow tines in the side wings and an outermost harrow tine on the fixed support member 9 of the implement section is reduced to the spacing C.

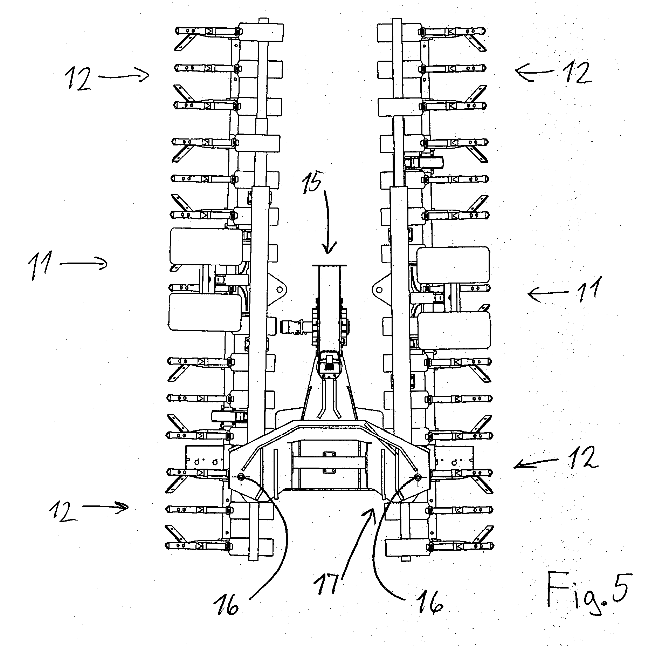

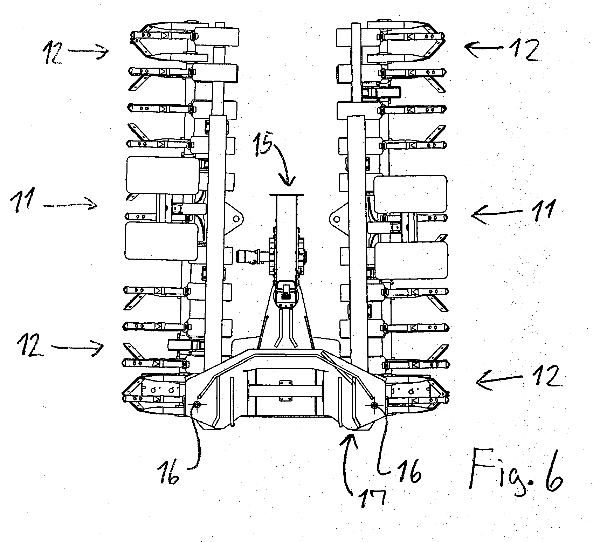

The retraction occurs in that the support members 9 are formed by an outer and an inner telescoping tube 13, 14. By collapsing the telescoping tubes, the side wings 12 can be displaced by a length corresponding to the spacing A between juxtaposed harrow tines 7 in an implement section 11. The total width of the implement section is reduced hereby. This is significant when the shown implement section for transport will be pivoted into a vertical transport position. The height of the implement in the transport position will be reduced due to the retraction of one side wing, and at the same time the ground clearance under the implement will increase due to the retraction of the other side wing. This is more clearly illustrated in Figs. 5 and 6.

Figs. 5 and 6 illustrate the two implement sections 11 with the side wings in an extended position and a retracted position, respectively. The two implement sections 11 are mounted in a common support frame 15. The implement sections 11 are mounted pivotable around journals 16. The implements may hereby be pivoted from the vertical transport position shown in Figs. 5 and 6 into a horizontal working position. In the vertical working position it appears clearly how by retraction of the side wings 12 to their inner transport position a reduction of the transport height and the ground clearance is achieved, the latter provided under the lower part 17 of the support frame 15 which is adapted for mounting to a traditional triple point suspension.

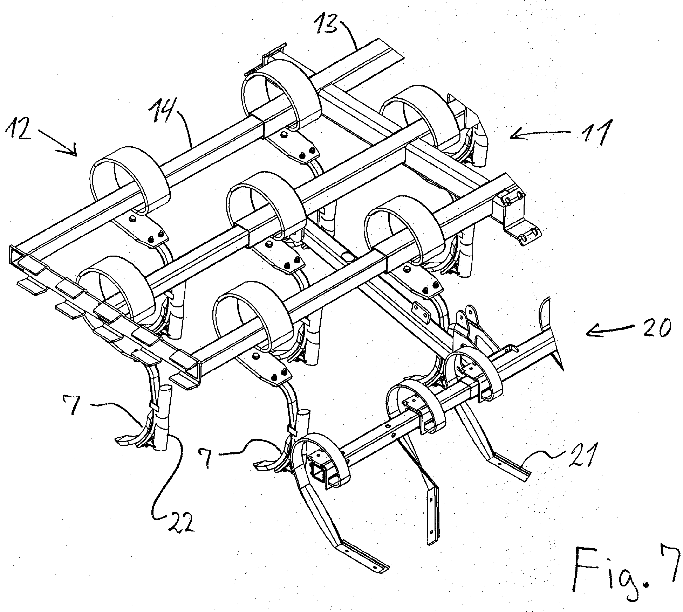

Fig. 7 shows a partial view of an implement section 11. It appears more clearly here how the inner telescoping tubes 14 are made in the form of quadrangular tubes that are retracted into the inner telescoping tubes 13. The inner telescoping tubes 13 constitute the fixed part of the implement section 11.

In Fig. 7 is also seen a trailing harrow 20 mounted on the implement section 19. The trailing harrow 20 is provided with soil working tools 21 serving to cover up the furrows formed by the harrow tines 7.

Behind the harrow tines is seen a support holder 22 intended for mounting the liquid manure hoses 6.

The trailing harrow 20 is also made with telescoping tubes that can be retracted by a length corresponding to the retraction of the side wings 12. The trailing harrow may also be retracted at each end corresponding to the retraction of the two side wings 12 associated with an implement section 11.

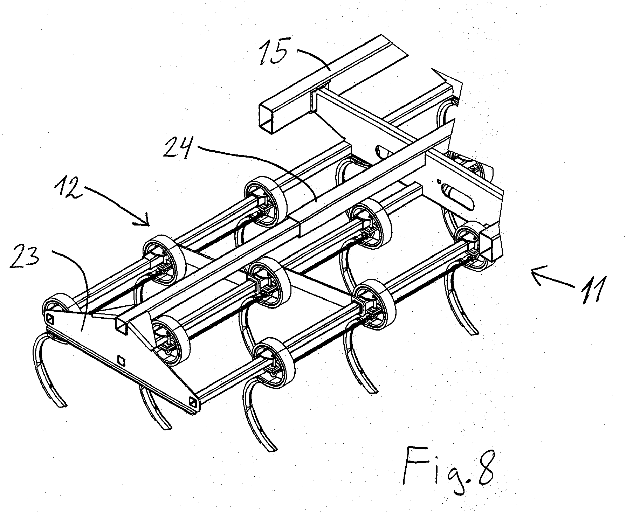

Fig. 8 illustrates a further embodiment of a harrow section 11. It is seen here how the side sections 12 are provided with a support holder plate 23. On the support holder plate 23 is fastened a hollow telescoping tube 24 which in the shown form includes an inner and an outer tube. In the telescoping tube 24 is mounted an actuator (not shown) that e.g. can be equipped with an electric or hydraulic cylinder, enabling the mutual movement of the two tubes. The actuator can alternatively be mounted in a different way than inside the tube. The actuator can be disposed externally of the telescoping tube 24.

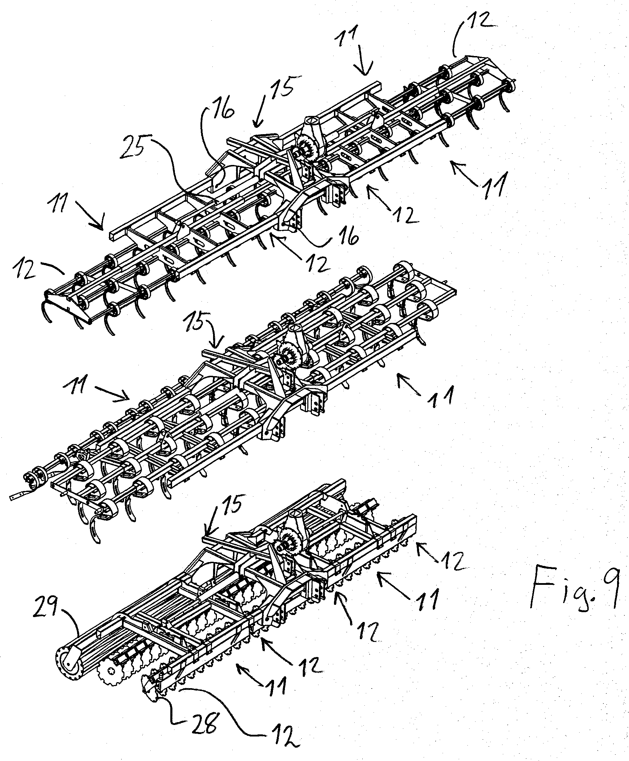

In Fig. 9 appears an actuator in the form of a hydraulic cylinder 25 used for retraction and extension of the side wings 12. The hydraulic cylinder 25 is connected with the support frame 15 at one end and connected with the side wing 12 of the implement section 11 at the other end, thus enabling retracting and extending of the side wings 12.

At the top of Fig. 9 is seen an implement according to the invention with a support frame 15 equipped with a triple point suspension in the form of two lower connections 26 and an upper coupling point 27 for coupling with a normal lift suspension. The two frame sections 11 are suspended in the support section 15 for pivoting between the shown horizontal working position where the side wings are extended in both implement sections 11, and a vertical transport position, e.g. as shown in Fig. 6.

In Fig. 9 appears that the support frame 15 also can be used for supporting other types of soil working implements. The soil working implement according to the present invention may thus be used in connection with support frames forming part of a general support system. A working implement with harrow tines can be seen at the middle of the Figure. At the bottom appear working tools in the form of two rows of discs 28 and a compacting roller 29.

In the shown embodiment, the other tools 1 are not shown with movable side wings 12 on the implement sections 11. However, it will be possible that the soil working tools in an implement according to the invention are constituted by discs 28.

## Claims

1. A soil working implement including an implement frame having a plurality of parallel support members that extend transversely of a working direction, each provided with juxtaposed soil working tools, the implement frame being divided into at least two implement sections that are pivotably interconnected in order to be pivoted between a horizontal working position and a vertical transport position, **characterised in that** at each side of two implement sections there is provided a side wing that supports soil working tools, and which can be pivoted or displaced between an inner transport position and an outer working position in order to increase the working width of the implement.

2. Implement according to claim 1, **characterised in that** the soil working tools are spring tines.

3. Implement according to claim 1, **characterised in that** the soil working tools are discs.

4. Implement according to any preceding claim, **characterised in that** the tool is a lift suspended tool.

5. Implement according to any preceding claim, **characterised in that** the support members are made of telescoping tubes that enable displacement of the side wings.

6. Implement according to claim 5, **characterised in that** the displacement of the side wings between the inner transport position and the outer working position corresponds to the distance between juxtaposed soil working tools in the associated implement section.

7. Implement according to any of claims 1 - 4, **characterised in that** the side wings are hinged about a vertical shaft at a front end of an associated implement section such that the rearmost soil working tool from the transport position to the working position is moved a distance corresponding to the distance between juxtaposed soil working tools in the associated implement section.

8. Implement according to any preceding claim, **characterised in that** the two implement sections are mounted on a support frame supporting an actuator which is connected with the side wings for providing the movement between the inner transport position and the outer working position.

9. Implement according to claim 8, **characterised in that** the two tools sections are suspended pivotably in the support frame such that they are spaced apart by pivoting to the working position, and that the two implement sections only after movement of the side wings facing each other will be closely juxtaposed such that tools are disposed with uniform spacing across the entire width of the implement.

10. Implement according to any preceding claim, **characterised in that** it is mounted on a slurry tanker.
